# EUROPÄISCHE PATENTSCHRIFT

(11) **EP 2 584 218 B1**
(45) Veröffentlichungstag und Bekanntmachung des Hinweises auf die Patenterteilung: **01.06.2016**
(21) Anmeldenummer: 12007178.2
(22) Anmeldetag: 17.10.2012
(51) Int. Cl.: F16G 3/10

(54) **Riemen als Zugmittel für Förderbänder Iandwirtschaftlicher Maschinen**
Belt as traction mechanism for conveyor belts of agricultural machines
Courroie servant de moyen de traction pour des bandes de transport de machines agricoles

(30) Priorität: 20.10.2011 DE 102011116633
(43) Veröffentlichungstag der Anmeldung: 24.04.2013
(73) Patentinhaber: Arnold Jäger Holding GmbH, 30625 Hannover (DE)
(72) Erfinder: Gentz, Hans-Jürgen, DE-31162 Bad Salzdetfurth (DE); Jäger, Sebastian, DE-30657 Hannover (DE)
(74) Vertreter: Seewald, Jürgen

(56) Entgegenhaltungen:
- DE-A1- 1 805 364
- DE-T2-602005 002 354
- US-A- 4 705 495

## Beschreibung

Die Erfindung betrifft einen Riemen als Zugmittel für Förderbänder landwirtschaftlicher Maschinen gemäß dem Oberbegriff des Anspruchs 1.

Förderbänder, die Riemen als Zugmittel aufweisen, kommen unter anderem in landwirtschaftlichen Maschinen zur Anwendung. Derartige Förderbänder weisen meist zwei oder mehr parallel zueinander angeordnete Riemen auf, die durch Querelemente, z. B. Stäbe, miteinander verbunden sind.

Die Riemen müssen für ihren Einsatz in endloser Form vorliegen. Zur Herstellung einer derartigen endlosen Form sind aus dem Stand der Technik verschiedene Vorgehensweisen bekannt.

So ist es aus der DE 100 37 645 A1 bekannt, die beiden Enden eines Riemens kammartig zu verzahnen und diese Verzahnungsbereiche zum Endlosmachen des Riemens ineinander zu schieben und nachzuvulkanisieren.

In der DE 297 16 333 U1 und der DE 10 2006 022 011 B3 erfolgt das Endlosmachen eines als Nockenriemen ausgeführten Zugmittels durch ein Riemenschloss. Derartige Riemenschlösser werden in verschiedenen Ausführungen häufig zum Endlosmachen von Zugmitteln für Förderbänder von landwirtschaftlichen Maschinen eingesetzt.

In der DE 1 805 364 A wird ein Verfahren zum Endlosmachen eines Förderbandes beschrieben, das darin besteht, dass die beiden Enden des Förderbandes über die gesamte Breite abgestuft werden, wodurch ein Überlappungsbereich mit einer oberen und einer unteren Stufe gebildet wird. In diesem Überlappungsbereich liegen die beiden Enden des Förderbandes aufeinander. Die beiden abgestuften Enden des Förderbandes ergänzen sich damit zu seiner Gesamtstärke und werden durch Nachvulkanisation zugfest miteinander verbunden.

Als Nachteil dieses Verfahrens wird beschrieben, dass aufgrund der durch die Stufenbildung hervorgerufenen Unterbrechung der Gewebeverstärkungslagen Festigkeits- und Tragfähigkeitseinbußen an der Verbindungsstelle in Kauf genommen werden müssen.

Um diesen Nachteil zu beseitigen, wird in der DE 1 805 364 A vorgeschlagen, bei einem Förderband aus Gummi und mindestens zwei Gewebeverstärkungslagen mit einer Zwischengummischicht die Zwischengummischicht im Überlappungsbereich und darüber hinaus zu entfernen und durch eine Einlage aus beidseitig gummiertem Verstärkungsgewebe zu ersetzen und anschließend diese Verbindung nachzuvulkanisieren. Das Verstärkungsgewebe erstreckt sich über die Stoßstellen von oberer Stufe und unterer Stufe hinaus, wodurch an der Verbindungsstelle höhere Zugkräfte aufgenommen werden können. Das Förderband wird an seinen Umlenkrollen gekrümmt, wodurch es zu Aufbiegungen an den Stoßstellen von oberer und unterer Stufe kommen kann, so dass letztlich nur noch die zusätzlich eingefügte Gewebeverstärkungslage Zugkräfte überträgt.

In der DE 60 2005 002 354 B2 ist eine ähnliche Verbindung gemäß dem Oberbegriff des Anspruchs 1 offenbart. Hier weisen die Enden eines endlos zu machenden Förderbandes sich gegenseitig ergänzende Formen auf, die schuppenförmig angeordnet sind, wobei die beiden Förderbandenden weiche textilartige oder andere Bewehrung umfassen. Das Förderband ist an seinen Enden mit Schaleneinsätzen bzw. hülsenartigen Einsätzen ausgestattet, die den Durchgang von Montagemitteln, z. B. Schrauben erlauben.

In der US 4 705 495 A ist ein Notfall-Keilriemen für Kraftfahrzeuge offenbart. Die beiden Enden des Keilriemens sind abgestuft, wodurch ein Überlappungsbereich mit einer oberen und einer unteren Stufe gebildet ist. An den Innenseiten von oberer Stufe und unterer Stufe sind Zähne ausgebildet, die durch Zahnlücken voneinander beabstandet sind. Zum Verbinden der Riemenenden können die Zähne der oberen Stufe in die Zahnlücken der unteren Stufe und umgekehrt eingedrückt werden. Die Verbindung erfolgt dann durch Verschraubung von oberer und unterer Stufe im Überlappungsbereich. Die Länge des Notfall-Keilriemens kann dabei dadurch festgelegt werden, indem der gesamte verzahnte Bereich von oberer Stufe und unterer Stufe zur Verbindung genutzt wird oder nur ein Teilbereich.

Aufgabe der vorliegenden Erfindung ist es, einen Riemen als Zugmittel für Förderbänder landwirtschaftlicher Maschinen zur Verfügung zu stellen, der im Überlappungsbereich eine hohe statische und dynamische Festigkeit aufweist.

Diese Aufgabe wird erfindungsgemäß mit einem Riemen gelöst, der die Merkmale des Anspruchs 1 oder 4 aufweist.

Da erfindungsgemäß die innere Gewebelage von unterer Stufe und/oder oberer Stufe in einem Teilbereich, der mindestens eine Verbindungsstelle umfasst, in den Überlappungsbereich hineinreicht, und sich die übrigen Gewebelagen von unterer Stufe und oberer Stufe über den gesamten Überlappungsbereich erstrecken, liegen in diesem Teilbereich 2n-1 Gewebelage übereinander. Dadurch bleibt in diesem neuralgischen Bereich fast die volle statische und dynamische Festigkeit des unverletzten Riemens erhalten. Eine an den Umlenkstellen des Riemens im Betrieb nicht vollständig zu vermeidende Aufbiegung wird so deutlich gemindert. Gleichzeitig trägt die im Überlappungsbereich vorgesehene Verzahnung von oberer Stufe und unterer Stufe zu einer wesentlichen Erhöhung der Zugfestigkeit im Überlappungsbereich bei. Die im Überlappungsbereich vorgesehene Verschraubung bzw. Vernietung trägt dazu einen festen Eingriff der Verzahnungen ineinander bei.

In weiterer vorteilhafter Ausgestaltung der Erfindung sind die Verzahnungselemente nur im Bereich der Verbindungsstellen angeordnet, während die dazwischen liegenden Bereiche glatt, d.h., frei von Verzahnungselementen sind. Diese Ausbildung hat den Vorteil, dass die Verzahnungselemente im Bereich der Verbindungsstellen besonders effektiv ineinander gedrückt werden, während die glatten Bereiche zwischen den Verbindungsstellen ein Gleiten der Riemenenden gegeneinander in den Umlenkungen ermöglichen.

Weitere vorteilhafte Ausgestaltungen der Erfindung ergeben sich aus den übrigen Unteransprüchen.

Die Erfindung wird nachstehend anhand von Ausführungsbeispielen näher erläutert. In der dazugehörigen Zeichnung zeigt:
- Fig. 1: eine Seitenansicht des Überlappungsbereichs eines Riemens nach einer ersten Ausführungsform der Erfindung,
- Fig. 2: einen perspektivischen Blick von schräg oben auf die Darstellung gemäß Fig. 1,
- Fig. 3: eine Seitenansicht des Überlappungsbereichs eines Riemens nach einer zweiten Ausführungsform der Erfindung,
- Fig. 4: einen perspektivischen Blick von schräg oben auf die Darstellung gemäß Fig. 3,
- Fig. 5: einen vergrößerten Ausschnitt A aus der Darstellung gemäß Fig. 3, und
- Fig. 6: eine Darstellung gemäß Fig. 5 in einer weiteren Ausführungsform der vorliegenden Erfindung.

In den nachfolgenden Ausführungsbeispielen werden für gleiche oder gleichwirkende Bauteile gleiche Bezugszeichen verwendet.

Die in der Zeichnung dargestellten Riemen 1 werden als Zugmittel für Förderbänder landwirtschaftlicher Maschinen eingesetzt. Derartige Förderbänder weisen meist zwei oder mehr zueinander parallel verlaufende Riemen 1 auf, die z. B. durch Querstäbe miteinander verbunden sind.

Die Riemen 1 aller Ausführungsbeispiele bestehen aus einem gewebelagenverstärkten, vernetzten Polymer und besitzen drei Gewebelagen 2, die jeweils durch Gummischichten voneinander getrennt und auf den Außenseiten der Riemen 1 durch eine Polymerschicht 8 abgedeckt sind. Die Riemen 1 weisen zur Herstellung ihrer endlosen Form einen Überlappungsbereich Ü auf. In diesem Überlappungsbereich Ü sind die beiden Enden der Riemen 1 derart abgestuft, dass an dem einen Ende eine obere Stufe 3 und an dem anderen Ende eine untere Stufe 4 vorliegt.

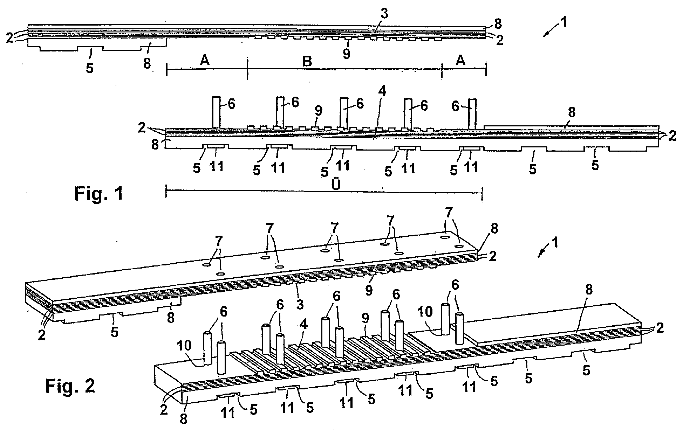

Der in dem Ausführungsbeispiel gemäß den Fig. 1 und 2 dargestellte Riemen 1 ist als Flachriemen ausgeführt. Er besitzt auf seiner Unterseite in gleichmäßigen Abständen angeordnete Nuten 5, die im Überlappungsbereich Ü der Aufnahme von Ankerplatte 11 dienen, welche jeweils mit zwei voneinander beabstandeten Schraubenbolzen 6 durch Verschweißen verbunden sind und sich im Wesentlichen über die gesamte Breite des Riemens 1 erstrecken. Die Schraubenbolzen 6 durch ragen in der unteren Stufe 4 vorgesehene Löcher 10 und in der oberen Stufe 3 vorgesehene Löcher 7. Die Komplettierung der Schraubverbindung zwischen oberer Stufe 3 und unterer Stufe 4 erfolgt dann durch Aufschrauben von Muttern auf die Schraubenbolzen 6, was in der Zeichnung nicht dargestellt ist.

Bei dem Ausführungsbeispiel gemäß den Fig. 1 und 2 sind im Überlappungsbereich Ü zur Bildung der oberen Stufe 3 und der unteren Stufe 4 die innen liegenden, äußeren Polymerschichten 8 des Riemens 1 vollständig entfernt. Des Weiteren ragen die jeweils innenliegenden Gewebelagen 2 von oberer Stufe 3 und unterer Stufe 4 in einem Teilbereich A in den Überlappungsbereich Ü hinein. In diesen Teilbereichen A liegen somit fünf Gewebelagen 2 übereinander, während zwischen den Enden der inneren Gewebelagen 2 von oberer Stufe 3 und unterer Stufe 4 ein Zwischenraum B gebildet ist, in dem vier Gewebelagen 2 aufeinanderliegen. In dem Zwischenraum B sind die dort fehlenden inneren Gewebelagen 2 durch auf die Innenseite der oberen Stufe 3 und der unteren Stufe 4 auf vulkanisierte Verzahnungselemente 9 ersetzt. Diese Verzahnungselemente 9 sind in dem gezeigten Ausführungsbeispiel durch sich quer zur Längserstreckung der Riemen 1 ausgerichtete Leisten gebildet, wobei die Leisten von oberer Stufe 3 und unterer Stufe 4 so ausgebildet sind, dass sie formschlüssig ineinander greifen. Aufgrund dieser Verzahnung von oberer Stufe 3 und unterer Stufe 4 im Zwischenraum B wird die Zugfestigkeit des Riemen 1 im Überlappungsbereich Ü erhöht. Die Verzahnungselemente 9 können auch andere Geometrien aufweisen. Wesentlich ist, dass sie Zugkräfte in Längsrichtung der Riemen 1 aufnehmen können.

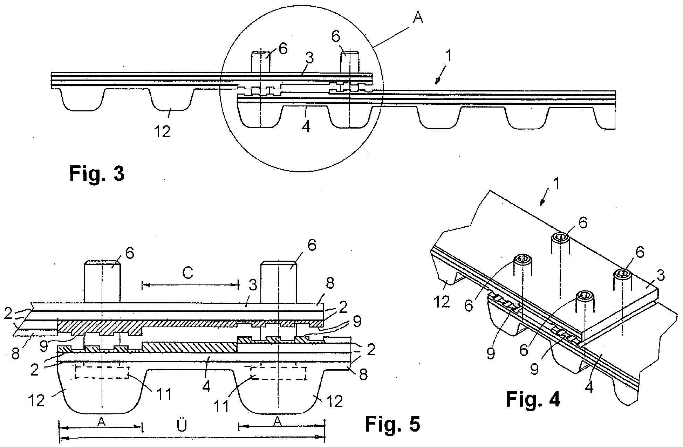

Die in den Ausführungsbeispielen gemäß den Fig. 3 bis 6 dargestellten Riemen 1 sind als Nockenriemen ausgeführt. Derartige Nockenriemen laufen in landwirtschaftlichen Maschinen um angetriebene Nockenräder bzw. mitgenommene Nockenräder um. Sie weisen auf ihrer Unterseite Nocken 12 auf, die mit den Nockenrädern der landwirtschaftlichen Maschine zum Antrieb des Riemens 1 in einen formschlüssigen Eingriff gelangen.

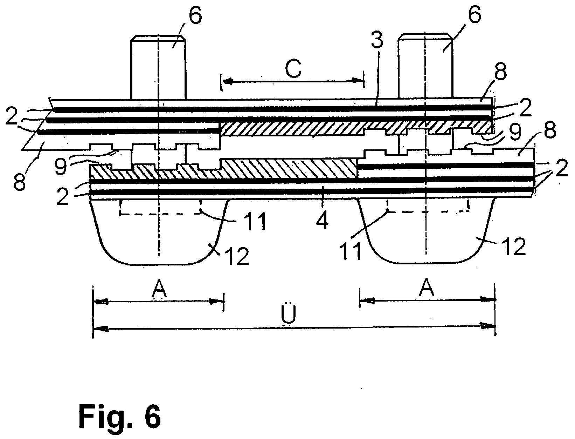

Im Überlappungsbereich Ü, der in diesem Ausführungsbeispiel zwei Verbindungsstellen 6 umfasst, sind in die zugeordneten Nocken 12 Ankerplatten 11 einvulkanisiert, wie in den Fig. 5 und 6 strichliniert dargestellt ist. Diese Ankerplatten 11 erstrecken sich im Wesentlichen über die gesamte Breite des Riemens 1 und weisen jeweils zwei voneinander beabstandete Schraubenbolzen 6 auf, die mit der Ankerplatte 11 verschweißt sind. Die Schraubenbolzen 6 durchragen in der oberen Stufe 3 vorgesehene, aus der Zeichnung nicht ersichtliche Löcher. Die Komplettierung der Schraubverbindung zwischen Oberstufe 3 und Unterstufe 4 erfolgt dann durch Aufschrauben von Muttern auf die Schraubenbolzen 6, was in der Zeichnung nicht dargestellt ist.

Bei dem Ausführungsbeispiel gemäß den Fig. 3 bis 5 sind im Überlappungsbereich Ü zur Bildung der oberen Stufe 3 und der unteren Stufe 4 ebenfalls wieder die innenliegenden Polymerschichten 8 des Riemens 1 vollständig entfernt. Desweiteren ragt die innenliegende Gewebelage 2 der unteren Stufe 4 in einem Teilbereich A in den Überlappungsbereich Ü hinein. In diesem Teilbereich A liegen somit fünf Gewebelagen 2 übereinander. In der oberen Stufe 3 endet die innere Gewebelage 2 vor dem Überlappungsbereich Ü, ist also nicht in diesen hineingeführt. Natürlich kann die innere Gewebelage 2 der oberen Stufe 3 auch in einem Teilbereich A in den Überlappungsbereich Ü hineingeführt sein, wie für die untere Stufe 4 dargestellt ist. Dadurch wird die Flexibilität der Verbindungsstelle etwas verringert, die Zugfestigkeit aber dafür erhöht.

In Fig. 5 sind die nachträglich aufvulkanisierten Polymerschichten mit den Verzahnungselementen 9 durch eine Schraffur hervorgehoben. Aus dieser Darstellung wird ersichtlich, dass vor dem Auftrag dieser Schichten die innenliegenden Polymerschichten 8 von oberer Stufe 3 und unterer Stufe 4 sowie die innenliegenden Gewebelagen 2 von oberer Stufe 3 und unterer Stufe 4 teilweise entfernt wurden. Die Verzahnungselemente 9 sind nur im Bereich der Verbindungsstellen vorgesehen, während der dazwischen liegende Bereich C glatt gestaltet ist, um dort möglichst wenig Reibung zu haben.

Das Ausführungsbeispiel gemäß Fig. 6 unterscheidet sich von dem gemäß den Fig. 3 bis 5 dadurch, dass die innenliegende Polymerschicht 8 von unterer Stufe 4 und oberer Stufe 3 in einem Teilbereich A, der mindestens eine Verbindungsstelle umfasst, in den Überlappungsbereich Ü hineinreicht und im übrigen Überlappungsbereich Ü entfernt ist. Die nachträglich aufvulkanisierten Polymerschichten im Überlappungsbereich Ü sind in Fig. 6 ebenfalls wieder schraffiert dargestellt. Aus dieser Darstellung ist ersichtlich, dass die Verzahnungselemente 9 in den Teilbereichen A in der Polymerschicht 8 ausgebildet sind. Diese Verzahnungselemente 9 greifen in dazu komplementäre, auf einer direkt gegenüberliegenden Gewebelage 2 der jeweils anderen Stufe 3, 4 aufvulkanisierte Verzahnungselemente 9 ein.

## Patentansprüche

1. Riemen als Zugmittel für Förderbänder landwirtschaftlicher Maschinen, dessen Enden eine obere Stufe (3) bzw. eine untere Stufe (4) aufweisen, die in einem Überlappungsbereich Ü aufeinanderliegen und zugfest miteinander verbunden sind, wobei der Riemen (1) aus einem durch n Gewebelagen (2), mit n= 2 bis 4, verstärktem Polymer besteht und die n Gewebelagen (2) auf den Außenseiten des Riemens (1) durch eine innenliegende äußere Polymerschicht (8) abgedeckt sind, wobei obere Stufe (3) und untere Stufe (4) im Überlappungsbereich Ü durch mindestens zwei in Riemenlängsrichtung voneinander beabstandete, durch Verschraubung oder Vernietung gebildete Verbindungsstellen (6) zugfest miteinander verbunden sind, wobei die innenliegenden äußeren Polymerschichten (8) im Überlappungsbereich Ü vollständig entfernt sind, und die sich im Überlappungsbereich Ü direkt gegenüberliegenden Gewebelagen (2) von unterer Stufe (4) und oberer Stufe (3) mit komplementären Verzahnungselementen (9) versehen sind, die zur Zugübertragung ineinandergreifen, **dadurch gekennzeichnet, dass** sich die innere Gewebelage (2) von unterer Stufe (4) und/oder oberer Stufe (3) nur in einem Teilbereich A des gesamten Überlappungsbereichs Ü, der mindestens eine Verbindungsstelle (6) umfasst, in den Überlappungsbereich Ü hinein erstreckt, während sich die übrigen Gewebelagen (2) von unterer Stufe (4) und oberer Stufe (3) über den gesamten Überlappungsbereich Ü erstrecken, so dass die untere Stufe (4) und/oder die obere Stufe (3) in dem Teilbereich A über n Gewebelagen verfügen.

2. Riemen als Zugmittel für Förderbänder landwirtschaftlicher Maschinen gemäß Anspruch 1, **dadurch gekennzeichnet, dass** die Verzahnungselemente (9) nur im Bereich der Verbindungsstellen (6) angeordnet und die dazwischenliegenden Bereiche C glatt sind.

3. Riemen als Zugmittel für Förderbänder landwirtschaftlicher Maschinen gemäß Anspruch 1, **dadurch gekennzeichnet, dass** die Enden der jeweils innenliegenden Gewebelagen (2) von unterer Stufe (4) und oberer Stufe (3) durch einen Zwischenraum B voneinander beabstandet sind, und in den Zwischenraum B von der oberen Stufe (3) und der unteren Stufe (4) komplementäre Verzahnungselemente (9) zur Zugübertragung in Riemenlängsrichtung hineinragen.

4. Riemen als Zugmittel für Förderbänder landwirtschaftlicher Maschinen gemäß dem Oberbegriff des Anspruchs 1, **dadurch gekennzeichnet, dass** sich die innenliegende Polymerschicht (8) von unterer Stufe (4) und oberer Stufe (3) um einen Teilbereich A, der mindestens eine Verbindungsstelle (6) umfasst, in den Überlappungsbereich Ü hinein erstreckt und im übrigen Überlappungsbereich Ü entfernt ist, wobei in dem Teilbereich A Verzahnungselemente (9) in der Polymerschicht (8) ausgebildet sind, die in dazu komplementäre, an einer direkt gegenüberliegenden Gewebelage (2) der jeweils anderen Stufe (3, 4) ausgebildete Verzahnungselemente (9) eingreifen.

5. Riemen als Zugmittel für Förderbänder landwirtschaftlicher Maschinen gemäß Anspruch 4, **dadurch gekennzeichnet, dass** die innere Gewebelage (2) von unterer Stufe (4) und oberer Stufe (3) in dem Teilbereich A in den Überlappungsbereich Ü hineinragen und die übrigen Gewebelagen (2) von unterer Stufe (4) und oberer Stufe (3) sich über den gesamten Überlappungsbereich Ü erstrecken.

6. Riemen als Zugmittel für Förderbänder landwirtschaftlicher Maschinen gemäß einem der vorstehenden Ansprüche, **dadurch gekennzeichnet, dass** die Verzahnungselemente (9) quer zur Riemenlängsrichtung ausgerichtete Leisten sind.

7. Riemen als Zugmittel für Förderbänder landwirtschaftlicher Maschinen nach einem der vorstehenden Ansprüche, **dadurch gekennzeichnet, dass** die Verzahnungselemente (9) auf die Gewebelagen (2) aufvulkanisiert sind.

8. Riemen als Zugmittel für Förderbänder landwirtschaftlicher Maschinen nach einem der vorstehenden Ansprüche, **dadurch gekennzeichnet, dass** jede Verbindungsstelle aus zwei voneinander quer zur Riemenlängsrichtung beabstandeten Schraubenbolzen (6) oder Nietschäften besteht, die durch eine gemeinsame Ankerplatte (11) miteinander verbunden sind, die sich im Wesentlichen über die gesamte Riemenbreite erstreckt.

## Claims

1. Belt as a traction means for conveyor belts of agricultural machines, the ends of which belt have, respectively, an upper step (3) and a lower step (4) which lie on top of one another in an overlapping region 0 and are connected to one another in a tension-proof manner, wherein the belt (1) consists of a polymer reinforced with n fabric plies (2), where n = 2 to 4, and said n fabric plies (2) are covered, on the outer sides of the belt (1), by an internally located outer polymer layer (8), wherein the upper step (3) and the lower step (4) are connected to one another in a tension-proof manner in the overlapping region 0 by at least two connection points (6) which are spaced apart from one another in the longitudinal direction of the belt and are formed by screwing or riveting, and wherein the internally located outer polymer layers (8) are completely removed in the overlapping region 0, and the fabric plies (2) of the lower step (4) and upper step (3), which fabric plies lie directly opposite each other in said overlapping region U, are provided with complementary toothing elements (9) which engage in one another for transmitting traction,
**characterised in that**
the inner fabric ply (2) of the lower step (4) and/or the upper step (3) extends into the overlapping region Ü only in a partial region A of the entire overlapping region 0, which partial region comprises at least one connection point (6), while the rest of the fabric plies (2) of the lower step (4) and upper step (3) extend over the entire overlapping region 0, so that the lower step (4) and/or the upper step (3) have n fabric plies in the partial region A.

2. Belt as a traction means for conveyor belts of agricultural machines, according to Claim 1,
**characterised in that**
the toothing elements (9) are arranged only in the region of the connection points (6) and the regions C lying between them are smooth.

3. Belt as a traction means for conveyor belts of agricultural machines, according to Claim 1,
**characterised in that**
the ends of the respective internally located fabric plies (2) of the lower step (4) and upper step (3) are spaced apart from one another by an intervening space B, and complementary toothing elements (9) for transmitting traction in the longitudinal direction of the belt project into said intervening space B from the upper step (3) and the lower step (4).

4. Belt as a traction means for conveyor belts of agricultural machines, according to the precharacterising clause of Claim 1,
**characterised in that**
the internally located polymer layer (8) of the lower step (4) and upper step (3) extends, by a partial region A which comprises at least one connection point (6), into the overlapping region 0 and is removed in the rest of said overlapping region 0, there being constructed in the polymer layer (8), in the partial region A, toothing elements (9) which engage in toothing elements (9) which are complementary to them and are constructed on a directly opposite fabric ply (2) of the other step (3, 4) in each case.

5. Belt as a traction means for conveyor belts of agricultural machines, according to Claim 4,
**characterised in that**
the inner fabric plies (2) of the lower step (4) and upper step (3) project into the overlapping region 0 in the partial region A and the rest of the fabric plies (2) of the lower step (4) and upper step (3) extend over the entire overlapping region Ü.

6. Belt as a traction means for conveyor belts of agricultural machines, according to one of the preceding claims,
**characterised in that**
the toothing elements (9) are strips which are oriented transversely to the longitudinal direction of the belt.

7. Belt as a traction means for conveyor belts of agricultural machines, according to one of the preceding claims,
**characterised in that**
the toothing elements (9) are vulcanised onto the fabric plies (2).

8. Belt as a traction means for conveyor belts of agricultural machines, according to one of the preceding claims,
**characterised in that**
each connection point consists of two screw bolts (6) or rivet shanks which are spaced apart from one another, transversely to the longitudinal direction of the belt, and which are connected to one another by a common anchor plate (11) which extends substantially over the entire width of the belt.

## Revendications

1. Courroie servant de moyen de traction pour des convoyeurs à bande de machines agricoles, courroie, dont les extrémités présentent un palier supérieur (3), respectivement un palier inférieur (4) qui sont superposés dans une zone de chevauchement Ü et reliés l'un à l'autre de manière résistante à la traction, la courroie (1) étant constituée d'un polymère renforcé par n couches de tissus (2), n étant 2 à 4, et les n couches de tissu (2) étant recouvertes sur les faces extérieures de la courroie (1) par une couche externe en polymère (8), située à l'intérieur, le palier supérieur (3) et le palier inférieur (4) étant, dans la zone de chevauchement Ü, reliés l'un à l'autre de manière résistante à la traction par au moins deux points de liaison formés par vissage ou rivetage et espacés l'un de l'autre dans le sens longitudinal de la courroie, les couches externes en polymère (8), situées à l'intérieur, étant intégralement éliminées dans la zone de chevauchement Ü et les couches de tissu (2) du palier inférieur (4) et du palier supérieur (3), qui sont directement opposées l'une à l'autre dans la zone de chevauchement Ü, étant pourvues d'éléments d'engrènement complémentaires (9), qui s'engrènent pour la transmission de l'effort de traction,
**caractérisé en ce que**
la couche de tissu interne (2) du palier inférieur (4) et/ou du palier supérieur (3) s'étend, dans la zone de chevauchement Ü, seulement dans une partie A de l'ensemble de celle-ci, partie A, qui comprend au moins un point de liaison (6), alors que les autres couches de tissu (2) du palier inférieur (4) et du palier supérieur (3) s'étendent sur l'ensemble de la zone de chevauchement Ü de manière que le palier inférieur (4) et/ou le palier supérieur (3) disposent de n couches de tissu dans la partie A.

2. Courroie servant de moyen de traction pour des convoyeurs à bande de machines agricoles suivant la revendication 1, **caractérisée en ce que** les éléments d'engrènement (9) sont disposés seulement dans la zone des points de liaison (6) et **en ce que** les zones intermédiaires C sont lisses.

3. Courroie servant de moyen de traction pour des convoyeurs à bande de machines agricoles suivant la revendication 1, **caractérisée en ce que** les extrémités des couches de tissu (2), respectivement situées à l'intérieur, du palier inférieur (4) et du palier supérieur (3) sont espacées l'une de l'autre par un espace B et **en ce que** des éléments d'engrènement complémentaires (9) font saillie dans l'espace B du palier supérieur (3) et du palier inférieur (4) pour la transmission de l'effort de traction dans le sens longitudinal de la courroie.

4. Courroie servant de moyen de traction pour des convoyeurs à bande de machines agricoles suivant le préambule de la revendication 1, **caractérisé en ce que** la couche en polymère (8), située à l'intérieur, du palier inférieur (4) et du palier supérieur (3) s'étend dans la zone de chevauchement Ü, sur une partie A qui comprend au moins un point de liaison (6), et est éliminée dans le reste de la zone de chevauchement Ü, dans la couche en polymère (8), dans la partie A, étant formés des éléments d'engrènement (9) qui s'engrènent dans des éléments d'engrènement complémentaires (9) formés sur une couche de tissu (2) directement opposée de l'autre palier respectif (3, 4).

5. Courroie servant de moyen de traction pour des convoyeurs à bande de machines agricoles suivant la revendication 4, **caractérisée en ce que** la couche de tissu interne (2) du palier inférieur (4) et du palier supérieur (3) fait saillie dans la dans la partie A de la zone de chevauchement Ü et les autres couches de tissu (2) du palier inférieur (4) et du palier supérieur (3) s'étendent sur l'ensemble de la zone de chevauchement Ü.

6. Courroie servant de moyen de traction pour des convoyeurs à bande de machines agricoles suivant une des revendications précédentes, **caractérisée en ce que** les éléments d'engrènement (9) sont des barrettes orientées transversalement au sens longitudinal de la courroie.

7. Courroie servant de moyen de traction pour des convoyeurs à bande de machines agricoles suivant une des revendications précédentes, **caractérisée en ce que** les éléments d'engrènement (9) sont appliqués par vulcanisation sur les couches de tissu (2).

8. Courroie servant de moyen de traction pour des convoyeurs à bande de machines agricoles suivant une des revendications précédentes, **caractérisée en ce que** chaque point de liaison est constitué par deux boulons filetés (6) ou tiges de rivet, qui sont espacés l'un de l'autre transversalement au sens longitudinal de la courroie et reliés par une plaque d'ancrage commune (11) qui s'entend sensiblement sur l'ensemble de la largeur de la courroie.
